(19) **Europäisches Patentamt**

**European Patent Office**

**Office européen des brevets**

(11)  **EP 1 619 520 A1**

(12)  **EUROPEAN PATENT APPLICATION**

(43) Date of publication:
   **25.01.2006 Bulletin 2006/04**

(51) Int Cl.:
   *G01V 1/40* (2006.01)    *E21B 49/00* (2006.01)

(21) Application number: **04291853.2**

(22) Date of filing: **21.07.2004**

(84) Designated Contracting States:
   **AT BE BG CH CY CZ DE DK EE ES FI FR GB GR HU IE IT LI LU MC NL PL PT RO SE SI SK TR**
   Designated Extension States:
   **AL HR LT LV MK**

(71) Applicants:
   • **SERVICES PETROLIERS SCHLUMBERGER**
     **75007 Paris (FR)**
     Designated Contracting States:
     **FR**
   • **SCHLUMBERGER TECHNOLOGY B.V.**
     **2514 JG Den Haag (NL)**
     Designated Contracting States:
     **AT BE BG CH CY CZ DE DK EE ES FI GR HU IE IT LI LU MC PL PT RO SE SI SK TR**
   • **SCHLUMBERGER HOLDINGS LIMITED**
     **Road Town, Tortola (VG)**
     Designated Contracting States:
     **GB NL**

(72) Inventors:
   • **Cao, Di c/o Schlumberger Technologies Ltd**
     **Beijing 100084 (CN)**

   • **Charara, Marwan**
     **1 rue Henri Becquerel,**
     **92142 Clamart (FR)**
   • **Delhomme, Jean-Pierre**
     **1 rue Henri Becquerel,**
     **92142 Clamart (FR)**
   • **Lacour-Gayet, Philippe**
     **1 rue Henri Becquerel,**
     **92142 Clamart (FR)**
   • **Manin, Yves**
     **1 rue Henri Becquerel,**
     **92142 Clamart (FR)**

(74) Representative: **Weihs, Bruno Konrad**
   **Cabinet Osha Liang**
   **121, Avenue des Champs Elysées**
   **75008 Paris (FR)**

Remarks:
   Amended claims in accordance with Rule 86 (2) EPC.

(54)   **Method and apparatus for estimating a permeability distribution during a well test**

(57)    A method for estimating a property of a formation surrouning a borehole comprises applying transient well-test conditions to the borehole. A portion of the formation is excited with an acoustic signal. The acoustic response corresponding to the acoustic exciting is measured with an acoustic receiver located within the borehole. The property of the formation is estimated using the acoustic response.

FIG. 2

**Description**

**Background of Invention**

Field of the Invention

The invention relates generally to the field of boreholes well testing.

Background Art

Once a borehole is drilled, a well test is usually performed in order to estimate properties of a formation surrounding the borehole. In particular, a permeability or a porosity of a reservoir of the formation, e.g. an oil reservoir or a water reservoir (i.e., an aquifer), may be estimated at the well test.

The well test consists in applying transient well test conditions to the borehole and in providing well test measurements as a function of time.

Typically, a flow rate of the well is set, and the well test measurements comprise pressure measurements as a function of time: a pressure transient analysis is provided.

Alternatively, a flow-rate transient analysis may be performed, i.e. the pressure is set and the flow rate is monitored as a function of time.

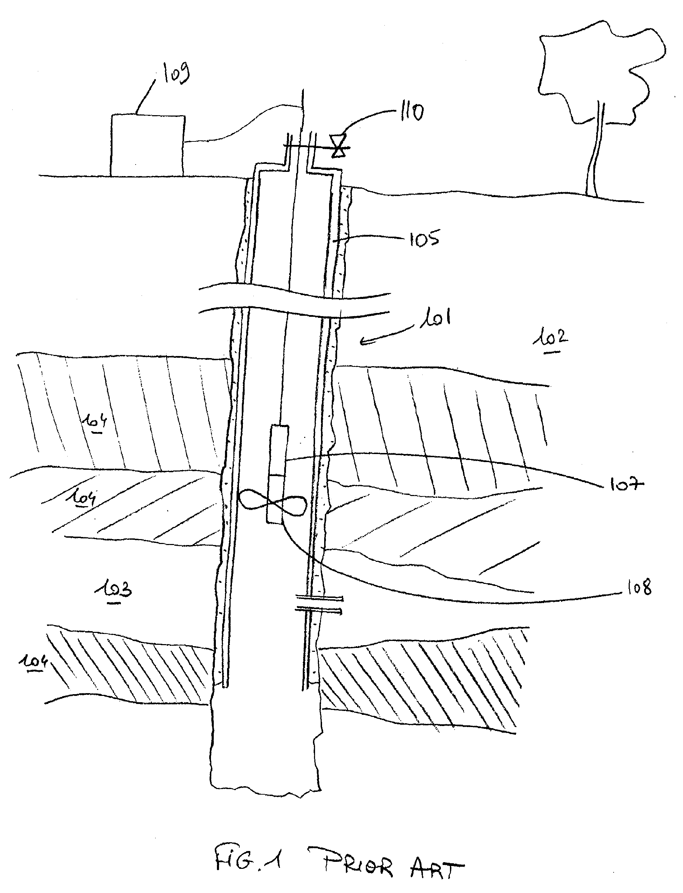

FIG. 1 illustrates an example of a conventional well test system from prior art. A borehole 101 is surrounded by a formation 102. The formation 102 may comprise a reservoir 103 and a plurality of additional layers 104. A casing 105 allows to isolate the formation 102. The casing 105 is perforated at a level of the reservoir 103.

The well test system comprises controlling means that allow to apply transient well test conditions. For example, a valve 110 allows to control a flow rate of a fluid, e.g. oil, flowing through the borehole 101. The well test system may further comprise a pressure sensor 107 and a flowmeter 108 that respectively allow to measure a borehole pressure and the flow rate. The pressure sensor 107 and the flowmeter 108 may be located downhole, as represented in FIG. 1, or at a surface location.

In a drawdown test, the fluid from the reservoir 103 flows through the borehole 101, at a set flow rate. The permeability is estimated from borehole pressure measurements. However, the drawdown pressure measurements are usually noisy, meaning that the pressure moves up and down as the fluid flows past the pressure sensor 107 and minute variations in flow rate take place. The flow rate is hence also monitored. The transient downhole flow rates measured while flowing can be used to correct pressure variations.

In a buildup test, the borehole is closed, i.e. the flow rate is null, and the pressure is monitored as a function of time.

A permeability of the reservoir 103 is estimated at processing means 109 from well test measurements as a function of time. The well test measurements may be the pressure measurements and/or the flow rate measurements. The estimating typically involves an inversion algorithm.

The estimating of the permeability is based on Darcy's law. However, a predicted Darcy pressure drop has to be corrected taking into consideration a skin effect. The skin effect can be either positive or negative. The skin effect is termed positive if there is an increase in pressure drop, and negative when there is a decrease, as compared with the predicted Darcy pressure drop. A positive skin effect indicates extra flow resistance near the wellbore, and a negative skin effect indicates flow enhancement near the wellbore.

An interference test method allows to avoid the effect of the skin : the pressure is measured at a distinct borehole, instead of being measured in the tested borehole. The interference test also allows to provide an azimuthal resolution. However, a plurality of distinct boreholes needs to be drilled around the tested borehole to provide an estimating of the permeability of the whole formation surrounding the tested borehole.

US Patent 5,548,563 describes a method for estimating azimuthal information about the geometry of a reservoir from conventional well test measurements. A measured response is compared to a computed response. However, this method may lead to relatively inaccurate results.

If the formation comprises one or more layered reservoirs, the estimating of the permeability of each reservoir is usually performed by setting packers below and above the layer inside the well so as to isolate the layer. A conventional well test is subsequently performed for each layer.

Both US Patents 4,799,157 and 5,247,829 describe a method for estimating a distribution of the permeability as a function of depth: for each layer, a pressure measurement and a flow rate measurement at a level of the layer are performed, thus allowing to estimate a value of the permeability of the layer.

**Summary of Invention**

In a first aspect the invention provides a method for estimating a property of a formation surrounding a borehole. The method comprises applying transient well-test conditions to the borehole and exciting a portion of the formation with an acoustic signal. An acoustic response corresponding to the acoustic exciting is measured with an acoustic receiver located within the borehole and the property of the formation is estimated using the acoustic response.

In a first preferred embodiment the method further comprises assessing a formation pressure using the acoustic response, and estimating the property of the formation using the assessed formation pressure.

In a second preferred embodiment the method further comprises measuring a plurality of acoustic responses, evaluating at least one variation of an acoustic response feature using the plurality of measured acoustic responses, and assessing at least one formation pressure change using the evaluated variation of the acoustic response feature.

In a third preferred embodiment the method further comprises measuring at least three acoustic responses respectively with at least three acoustic receivers, each acoustic receiver having a determined location within the borehole, and estimating a distribution of the property of the formation as a function of space using at least two assessed formation pressure changes.

In a fourth preferred embodiment the method further comprises measuring the plurality of acoustic responses at distinct times during the well-test, and estimating the property of the formation using the plurality of acoustic responses.

In a fifth preferred embodiment the method further comprises measuring the acoustic responses at various times during a well test using a plurality of acoustic receivers. A plurality of formation pressure changes are assessed as a function of depth and as a function of time using the acoustic responses, and a distribution of the property of the formation is estimated using the plurality of assessed formation pressure changes.

In a sixth preferred embodiment the method further comprises initially exciting a portion of the formation with an initial acoustic signal, and measuring at least one initial acoustic response corresponding to the initial exciting before a well test is performed. The initial acoustic response is used to estimate the property of the formation.

In a seventh preferred embodiment the method further comprises performing conventional well test measurements, and using the conventional well test measurements to estimate the property of the formation.

In an eighth preferred embodiment the applying of the transient well-test conditions comprises controlling a flow rate of a fluid within the borehole, and the conventional well test measurements are well test pressure measurements.

In a ninth preferred embodiment the property of the formation to be estimated is a permeability of the formation.

In a second aspect the invention provides a system for estimating a property of a formation surrounding a borehole. The system comprises controlling means to control a well test parameter, an acoustic emitter to excite at least a portion of the formation with an acoustic signal. The system further comprises at least one acoustic receiver located within the borehole, the at least one acoustic receiver allowing to measure at least one acoustic response corresponding to the acoustic exciting. The system further comprises processing means to estimate the property of the formation using the at least one acoustic response.

In a tenth preferred embodiment the system further comprises a plurality of acoustic receivers, each acoustic receiver having a determined location within the borehole. The acoustic emitter is located at a surface.

In an eleventh preferred embodiment the system further comprises a plurality of acoustic receivers, each acoustic receiver having a determined location within the borehole. The acoustic emitter is located within the borehole.

In a twelfth preferred embodiment the system further comprises at least one additional acoustic emitter.

In a thirteenth preferred embodiment of the system the well test parameter is a flow rate of a fluid within the borehole. The system further comprises at least one pressure sensor to perform well test pressure measurements.

In a fourteenth preferred embodiment the well test parameter is a pressure of a fluid flowing through the borehole. The system further comprises at least one flowmeter to perform well test flow rate measurements.

In a fifteenth preferred embodiment the property of the formation to be estimated is a permeability of the formation.

Other aspects and advantages of the invention will be apparent from the following description and the appended claims.

**Brief Description of Drawings**

FIG. 1 illustrates an example of a conventional well test from prior art.

FIG. 2 illustrates an example of a system according to the invention.

FIG. 3 contains a flowchart illustrating an example method according to a first preferred embodiment of the present invention.

FIG. 4 contains a flowchart illustrating an example method according to a second preferred embodiment of the present invention.

FIG. 5 contains a flowchart illustrating an example method according to a third preferred embodiment of the present invention.

FIG. 6 illustrates an example of a system according to a fourth preferred embodiment of the present invention.

FIG. 7 illustrates an example of a system according to a fifth preferred embodiment of the present invention.

FIG. 8 illustrates an example of a system according to a sixth preferred embodiment of the present invention.

FIG. 9 illustrates an example of a system according to a seventh preferred embodiment of the present invention.

FIG. 10 illustrates an example of a method according to an eighth preferred embodiment of the present invention.

## Detailed Description

In a conventional well test, transient well test conditions are applied, e.g. a flow rate is set, and a permeability of a formation is estimated from well test measurements, e.g. pressure measurements and/or flow rate measurements, as a function of time. The estimating may be relatively inaccurate. In particular, a skin effect may affect the estimating.

There is a need for a system and a method allowing a more accurate estimating of a property of a formation surrounding a borehole.

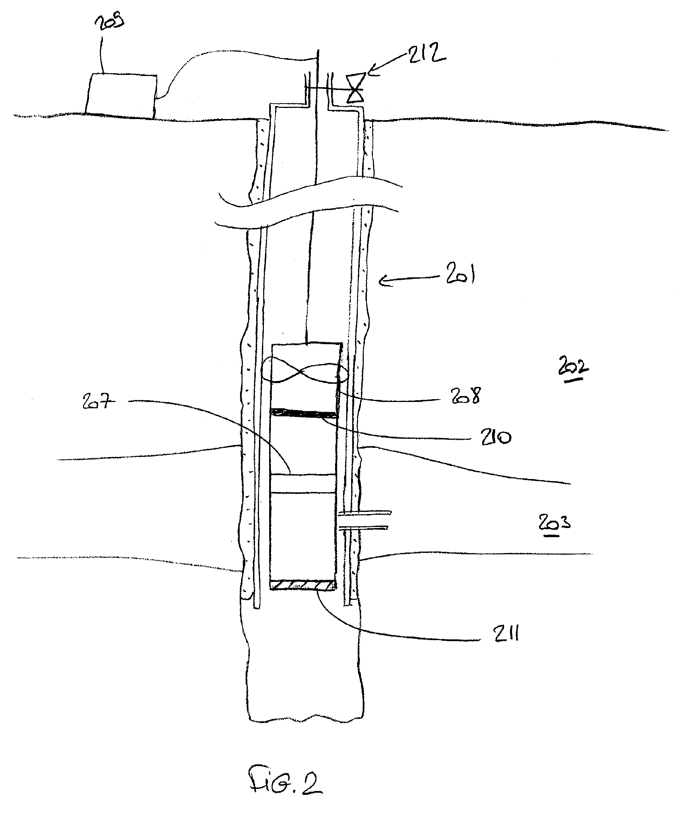

FIG. 2 illustrates an example of a system according to the invention. The system allows to estimate a property of a formation 202 surrounding a borehole 201. The formation 202 typically comprises a reservoir 203, e.g. an oil reservoir.

Transient well test conditions are applied to the borehole 201. The system comprises controlling means allowing to control a well test parameter, e.g. a valve 212 and a flowmeter 208 that allow to control a flow rate of a fluid flowing through the borehole 201.

The system further comprises an acoustic emitter 211 allowing to excite a portion of the formation with an acoustic signal. An acoustic receiver 210 located within the borehole 201 allows to measure an acoustic response corresponding to the acoustic exciting.

The property of the formation 202 is estimated at processing means 209 using the measured acoustic response.

The acoustic signal moves through the portion of the formation 202 before reaching the acoustic receiver 210 and is affected depending on characteristics of a crossed portion of the formation 202. The measured acoustic response is hence particularly sensitive to characteristics of the crossed portion of the formation 202, and notably to the fluid pressure inside this portion of the formation. The well test methods from prior art typically measure a pressure inside the borehole: such a conventional well test measurement is relatively affected by a skin effect due to a wall of the borehole. The method of the present invention hence allows to provide measurements during a well test that are more sensitive to an inside of the formation.

Preferably the property to be estimated by the method of the present invention is a permeability of the formation 202.

Additional measurements may be performed in order to provide a more reliable estimating of the property of the formation.

Typically, conventional well test measurements may be performed: a pressure sensor 207 allows to measure a borehole pressure as a function of time during the well test. The measured borehole pressure may be involved in the estimating of the property of the formation, either directly or for a verifying. Flow rate measurements performed at the flowmeter 208 may also be involved in the estimating of the property of the formation 202.

The additional measurements may also be additional acoustic response measurements. The method of the present invention comprises performing a single acoustic response measurement during a well test, or multiple acoustic response measurements.

**Single acoustic response measurement**

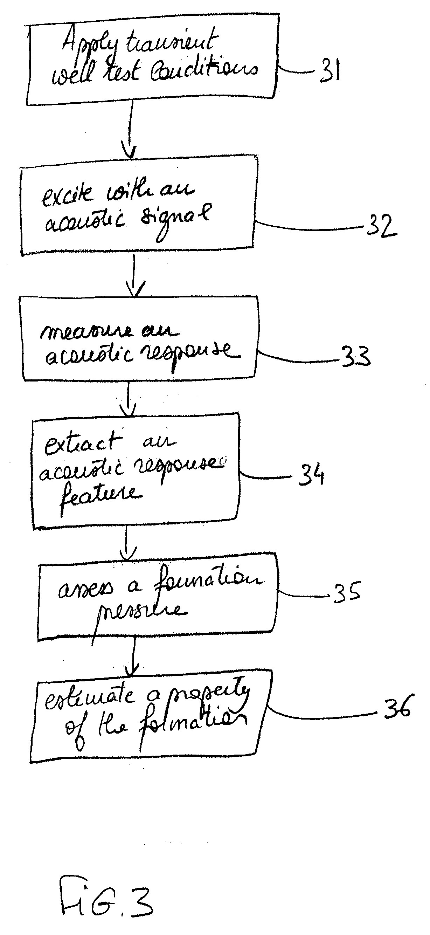

FIG. 3 contains a flowchart illustrating an example method according to a first preferred embodiment of the present invention. The method comprises applying transient well test conditions to a borehole (box 31). The method further comprises acoustically exciting a portion of a formation surrounding a borehole with an acoustic signal (box 32). An acoustic response is subsequently measured (box 33).

In the first preferred embodiment, the acoustic response allows to assess a formation pressure (box 35). A property of the portion of the formation, e.g. permeability, is subsequently estimated using the assessed formation pressure (box 36).

Preferably the acoustic signal is an acoustic wave propagating through the portion of the formation.

Preferably the formation pressure is assessed using acoustic response features of the measured acoustic response, e.g. a velocity of the acoustic wave. The acoustic response features are extracted from the measured acoustic response (box 34).

The method may further comprise a conventional well test pressure measurement (not represented). The property of the formation may be evaluated using both the well test pressure measurements and the assessed formation pressure.

In the first preferred embodiment, a single measuring of the acoustic response is performed during the well test, i.e. following the applying of the transient well test conditions. The estimating of the permeability of the formation requires a knowledge of values of a set of parameters, which may be relatively difficult to obtain.

**Multiple acoustic response measurements**

The permeability of the formation may also be estimated using a variation of a measurement, which allows to avoid predetermining the values of the set of parameters. In this case, a plurality of acoustic responses is measured. A variation of an acoustic response feature is evaluated from the plurality of measured acoustic responses. The variation of the acoustic response feature allows to assess at least one formation pressure change.

**Multiple measurements as a function of time**

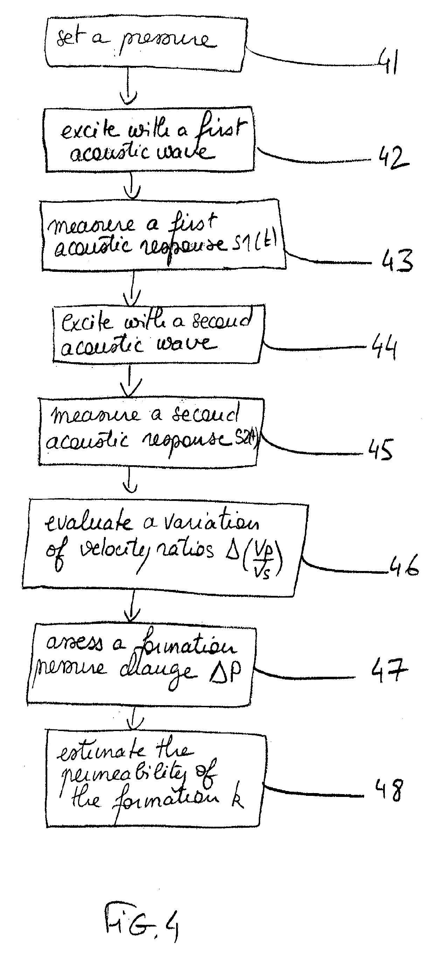

FIG. 4 contains a flowchart illustrating an example method according to a second preferred embodiment of the present invention. Two acoustic responses S1(t) and S2(t) are measured at distinct times of the well test, with a system that may be similar to the system illustrated in FIG. 2.

In the illustrated example, the well test is a flow rate transient test: transient well test conditions are applied by setting a pressure of a fluid within the borehole (box 41).

The method comprises exciting a portion of the formation with a first acoustic wave (box 42). A first acoustic response S1(t) corresponding to the first acoustic wave is subsequently measured (box 43). The method further comprises exciting the portion of the formation with a second acoustic wave (box 44) and measuring a second acoustic response S2(t) (box 45).

The first acoustic response S1(t) and the second acoustic response S2(t) typically have different acoustic response features, since well test parameters, e.g. a fluid flow rate in the well test of the illustrated example, have changed between the two measurings. A variation of the acoustic response feature is evaluated (box 46). In the illustrated example, the acoustic response feature of a determined acoustic response is a velocity ratio $\dfrac{Vp}{Vs}$ of a compressional velocity Vp of the acoustic response and of a shear velocity Vs of the acoustic response.

One formation pressure change $\Delta P$ is assessed from the variation of the velocity ratios $\Delta \dfrac{Vp}{Vs}$ (box 47).

It is subsequently possible to estimate the permeability k of a portion of the formation using the formation pressure change (box 48).

The method of the second preferred embodiment of the present invention may further comprise providing additional exciting (not represented on FIG. 4) and subsequent additional measuring of the acoustic response (not represented on FIG. 4) at distinct times. In a conventional well test, as performed in prior art, a well test parameter, e.g. flow rate and/or pressure, is monitored as a function of time, so as to provide a relatively reliable estimating of the permeability of a formation. Similarly, by providing a plurality of measurements of the acoustic response as a function of time, the method of the present invention allows to reliably estimate a property of the formation.

**Multiple measurements as a function of space**

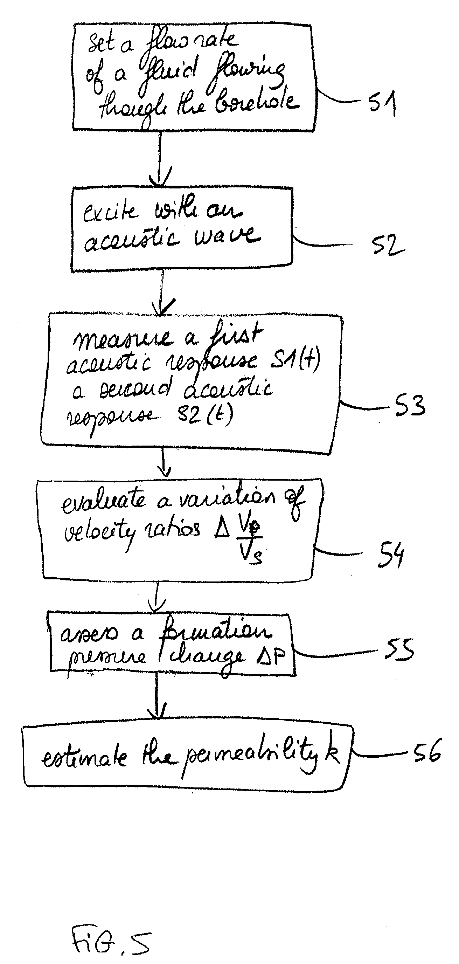

FIG. 5 contains a flowchart illustrating an example method according to a third preferred embodiment of the present invention. Two acoustic responses S1(t) and S2(t) are measured at the same time during a well test, with two distinct acoustic receivers located at distinct depths within a borehole.

In the illustrated example, a drawdown test is performed, i.e. a flow rate of a fluid flowing through the borehole is set (box 51). An acoustic emitter allows to excite a portion of the formation with an acoustic wave (box 52). A first acoustic response S1(t) and a second acoustic response S2(t) are respectively measured at a first acoustic receiver and at a second acoustic receiver (box 53).

As described in the second preferred embodiment of the present invention, a permeability k of the portion of the formation is estimated using the first acoustic response S1(t) and the second acoustic response S2(t). A variation of velocity ratios $\Delta \dfrac{Vp}{Vs}$ is evaluated (box 54) and a formation pressure change $\Delta P$ is subsequently assessed (box 55). The permeability k is estimated using for example Darcy's law (box 56).

The method may further comprise a conventional well test pressure measurement as a function of time during the well test (not represented), which allows to compute a well test value of the permeability. The well test value of the permeability may be compared to the estimated value of the permeability k, thus allowing to insure that the method of the present invention provides relevant results.

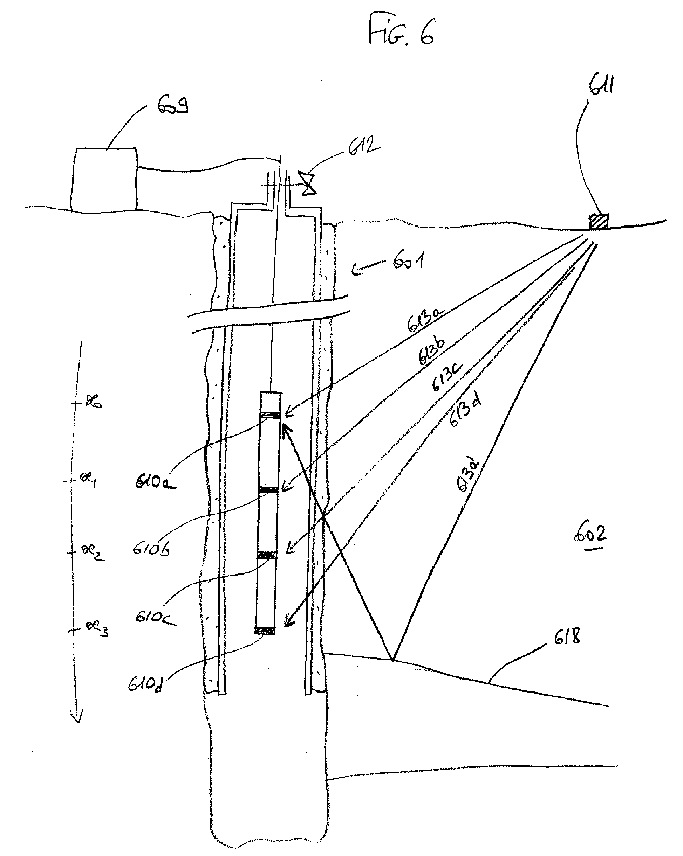

FIG. 6 illustrates an example of a system according to a fourth preferred embodiment of the present invention. The system comprises controlling means 612 to apply transient well test conditions to a borehole 601. An acoustic emitter 611 excites a portion of a formation 602 surrounding the borehole 601 with an acoustic wave. A plurality of acoustic receivers (610a, 610b, 610c, 610d) allows to respectively measure a plurality of acoustic signals ($S(x_0, t)$, $S(x_1, t)$, $S(x_2, t)$, $S(x_3, t)$). The measured acoustic signals ($S(x_0, t)$, $S(x_1, t)$, $S(x_2, t)$, $S(x_3, t)$) are processed at processing means 609 so as to estimate a permeability of the formation 602 as a function of space.

The acoustic emitter 611 is located at surface and the four acoustic receivers (610a, 610b, 610c, 610d) are located within the borehole 601. Each acoustic receiver (610a, 610b, 610c, 610d) has a determined location, e.g. a determined depth ($x_0$, $x_1$, $x_2$, $x_3$), within the borehole 601.

Preferably the acoustic emitter 611 is a seismic source allowing to excite the formation 602 with a seismic wave, and the acoustic receivers are seismic sensors, e.g., seismic geophones. Typically, the seismic wave has a frequency lower than 100 Hz.

Each measured acoustic signal ($S(x_0, t)$, $S(x_1, t)$, $S(x_2, t)$, $S(x_3, t)$) corresponds to one or more particular paths (613a, 613b, 613c, 613d) of the acoustic wave within the excited portion of the formation 602. Consequently, the measured acoustic signals ($S(x_0, t)$, $S(x_1, t)$, $S(x_2, t)$, $S(x_3, t)$) allow to provide information about a distribution of the permeability of the formation 602.

An acoustic response feature, e.g. a velocity ratio $\frac{Vp}{Vs}$, may be extracted from each measured acoustic response. The four extracted velocity ratios ( $(\frac{Vp}{Vs}(x_0), \frac{Vp}{Vs}(x_1), \frac{Vp}{Vs}(x_2), \frac{Vp}{Vs}(x_3))$ allow to evaluate three variations of velocity ratios $(((\Delta\frac{Vp}{Vs})_{01}, (\Delta\frac{Vp}{Vs})_{12}, (\Delta\frac{Vp}{Vs})_{23})$, each variation of velocity ratios ( $((\Delta\frac{Vp}{Vs})_{01}, (\Delta\frac{Vp}{Vs})_{12}, (\Delta\frac{Vp}{Vs})_{23})$ corresponding to a determined volume of the formation 602. As a consequence, three formations pressure changes ($(\Delta P)_{01}, (\Delta P)_{12}, (\Delta P)_{23}$) may be assessed. Three values of the permeability ($k_1, k_2, k_3$) may subsequently be estimated, each value corresponding to the determined volume of the formation 602 : the distribution of the permeability is thus estimated.

In the example illustrated in FIG. 6, the acoustic receivers are disposed within the borehole, at distinct depths, which allows to provide a distribution of the permeability as a function of depth. In a case of a layered formation, the processing means may detect a depth of each layer and estimate a permeability of each layer.

Alternatively, the acoustic emitter is disposed downhole, within a second borehole distinct from the borehole.

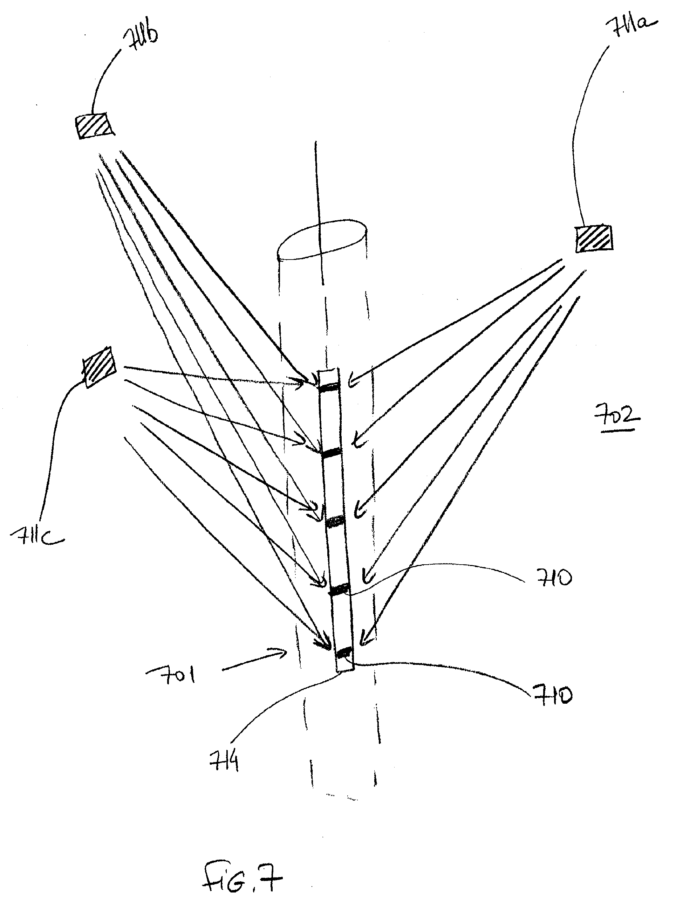

FIG. 7 illustrates an example of a system according to a fifth preferred embodiment of the present invention. In the fifth preferred embodiment, a tool 714 is lowered into a borehole 701. A plurality of acoustic receivers 710 are longitudinally disposed onto the tool 714.

The system further comprises controlling means (not represented on FIG. 7) that allow to apply transient well test conditions.

A plurality of acoustic emitters (711 a, 711b, 711c) are disposed at a surface, each acoustic emitter (711 a, 711 b, 711 c) having a determined azimuthal location relative to the tool 714.

The illustrated system allows to provide an estimation of a distribution permeability of a formation 702 as a function of depth and as a function of azimuth. A three dimensional estimation of the permeability may hence be provided.

Preferably each acoustic emitter excite a corresponding portion of the formation 702 at a determined time. The acoustic receivers 710 measure a plurality of acoustic signals before an other acoustic emitter is activated. This allows to avoid a superposition at the acoustic receivers 710 of acoustic waves providing from distinct acoustic emitters (711 a, 711 b, 711 c).

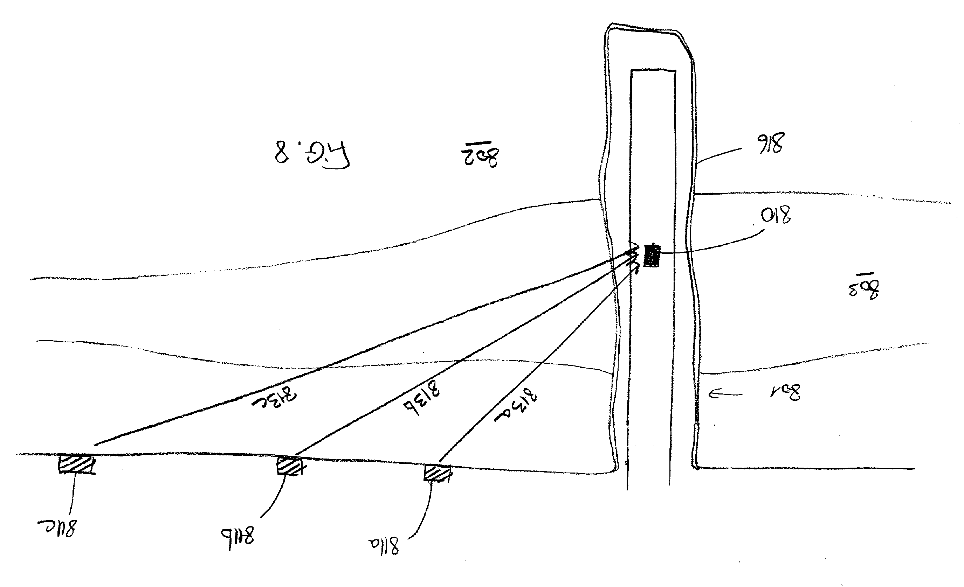

FIG. 8 illustrates an example of a system according to a sixth preferred embodiment of the present invention. Acoustic emitters (811a, 811b, 811c) are disposed at a same azimuth relative to a borehole 801. The acoustic emitters (811 a, 811b, 811c) are positioned at distinct distances from the borehole 801.

Each acoustic emitter excite a portion of a formation 802 with an acoustic wave and a corresponding acoustic response is measured at an acoustic receiver 810 located within the borehole 801.

Each acoustic wave propagates along one or more determined path (813a, 813b, 813c), each path (813a, 813b, 813c) having a determined length. The measured acoustic responses hence allow to estimate a distribution of a permeability of the formation. In particular, a permeability of a reservoir 803 may be estimated as a function of a distance to the borehole 801.

Furthermore, the system of the sixth preferred embodiment of the present invention may be particularly efficient in evaluating a skin effect due to a formation damage 816 around the borehole 801.

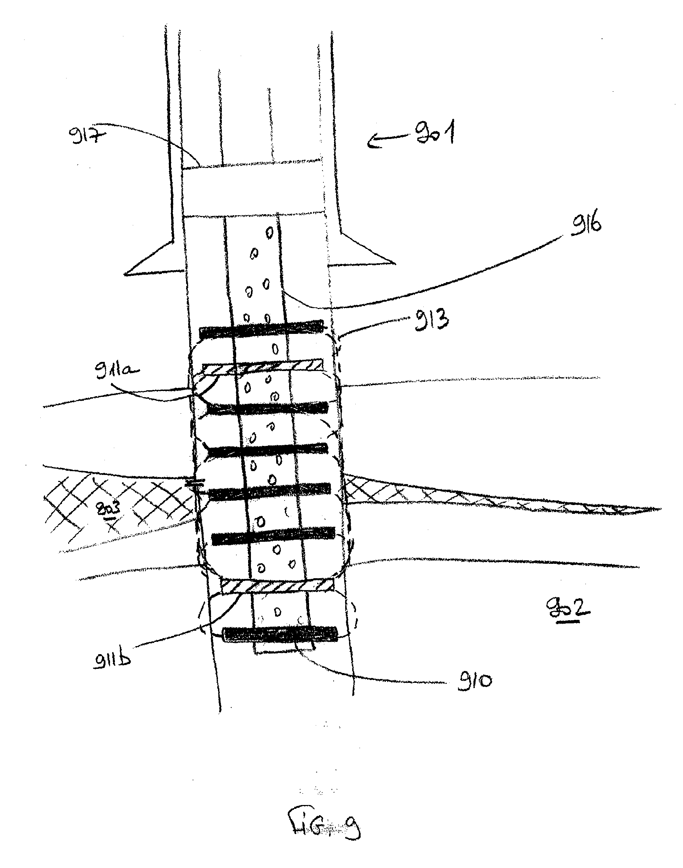

FIG. 9 illustrates an example of a system according to a seventh preferred embodiment of the present invention. Acoustic emitters (911 a, 911b) and acoustic receivers 910 are both located within a borehole 901. The acoustic emitters (911a, 911 b) excite a formation 902 with acoustic signals, e.g. acoustics waves. The acoustic receivers 910 measure an acoustic response that corresponds to a refracted portion of the acoustic waves : an information about the formation 902 is thus provided.

As illustrated in FIG. 9, the acoustic emitters (911 a, 911b) and the acoustic receivers 910 may be located onto a perforated tail pipe 916. A fluid, e.g. oil, providing from a reservoir 903 of the formation 902 may circulate through the perforated tail pipe. A packer 917 allows to isolate the reservoir 903.

Preferably the acoustic emitters (911a, 911b) are sonic sources, e.g. piezoelectric elements, and the acoustic receivers are sonic sensors. Each sonic source allows to emit a sonic wave. The sonic wave typically has a frequency within a range of 100Hz-20kHz.

Controlling means (not represented) allow to apply transient well test conditions before the exciting of the formation 902 by one acoustic emitter (911a, 911b).

A first acoustic emitter 911 a excites the formation 902 with a first acoustic wave, a portion of which is refracted at a wall of the borehole. The acoustic receivers 910 measure a first acoustic response corresponding to the refracted portion. A second acoustic emitter 911b subsequently excites the formation 902 with a second acoustic wave and the acoustic receivers 910 measure a second acoustic response.

Alternatively a single acoustic emitter is provided.

Alternatively at least three acoustic emitters are provided.

The first acoustic wave and the second acoustic wave may have a same frequency. Alternatively, the first acoustic wave and the second acoustic wave may have distinct frequencies.

A property of the formation 902, e.g. a permeability of the reservoir 903, or a porosity of the reservoir 903, is estimated from the acoustic measurements. Each acoustic measurement corresponds to one or more determined path 913 of an acoustic wave and hence allows to provide information about a determined portion of the formation 902.

The method according to the seventh preferred embodiment of the present invention allows to provide an estimation of a distribution of the permeability with a relatively high resolution in depth.

A radial profile of the permeability may also be obtained by performing a Fresnel-volume tomography. The Fresnel-volume tomography allows to determined a radial profile of a compressional velocity of a sonic wave over a few meters away from the borehole. The radial profile of the permeability is subsequently estimated using the radial profile of the compressional velocity.

**Multiple measurements as a function of space**

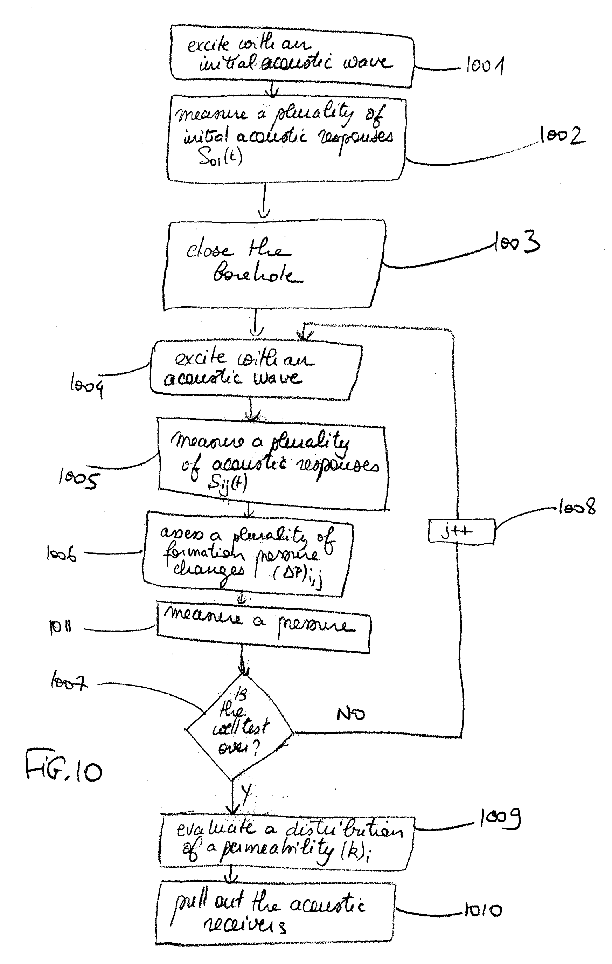

FIG. 10 illustrates an example of a method according to an eighth preferred embodiment of the present invention.

A plurality of acoustic sensors is disposed within a borehole. In the illustrated example, the acoustic sensors are indexed by a variable i. An acoustic emitter excites a portion of a formation surrounding the borehole with an initial acoustic signal (box 1001) and a plurality of initial acoustic responses $S_{i,0}(t)$ are measured at the plurality of acoustic receivers (box 1002).

A well test may be started following the initial measuring : transient well test conditions are applied. For example, the borehole is closed (box 1003) so as to perform a buildup test. A flow rate of a fluid, e.g. water, flowing through the borehole is hence null.

The acoustic emitter excites the portion of the formation with an acoustic wave (box 1004) and a plurality of acoustic responses $S_{i,j}(t)$ are measured at the plurality of acoustic receivers (box 1005).

For each acoustic receiver, a formation pressure change $(\Delta P)_{i,j}$ is assessed using a corresponding acoustic response and a corresponding initial acoustic response measured at the initial measuring (box 1002). Consequently, a plurality of formation pressure changes $(\Delta P)_{i,j}$ is assessed (box 1006).

The method further comprises testing whether the well test is finished or not, which may be performed for example by measuring a pressure within the borehole and by comparing the measured value of the pressure with a former value. If the measured value differs from the former value, it may be considered that the well test is still in progress.

In this case, a lapse time index j having initially a value equal to one is incremented (box 1008). The exciting with an acoustic wave (box 1004), the measuring (box 1005) and the assessing of the plurality of formation pressures changes $(\Delta P)_{i,j}$ (box 1006) are repeated as long as the well test is in progress, thus providing lapse-time measurements.

The assessing of the plurality of formation pressures changes $(\Delta P)_{i,j}$ may be performed using a plurality of acoustic responses $S_{i,j}(t)$ and a plurality of former acoustic responses $S_{i,j-1}(t)$ measured at a previous exciting.

Alternatively, the plurality of formation pressures changes $(\Delta P)_{i,j}$ may be assessed using the plurality of acoustic responses $S_{i,j}(t)$ and the plurality of initial acoustic responses $S_{i,0}(t)$.

The method according to the eighth preferred embodiment of the present invention hence comprises measuring acoustic responses at various times during the well test using the plurality of acoustic receivers : the acoustic responses are thus measured as a function of space and as a function of time. As a consequence a two-dimensional array of formation pressure changes $(\Delta P)_{i,j}$ is assessed.

Once the well test is over, a distribution of a permeability (k); may be estimated using the two-dimensional array of formation pressure changes $(\Delta P)_{i,j}$. The acoustic receivers may subsequently be pulled out of the borehole (box 1010).

In fact, for a determined acoustic receiver, the acoustic responses $S_{i0,j}(t)$ allow to estimate a single value of the permeability of an associated portion of the formation. The formation pressure has indeed a relatively low sensitivity versus acoustic responses features of the acoustic responses. The lapse-time measuring of the acoustic responses $S_{i0,j}(t)$ allow a more reliable estimation of the single value of the permeability than a single measuring of an acoustic response, as performed in the first preferred embodiment of the present invention, or for example in the second preferred embodiment when performed without any additional exciting.

The method according to the eighth preferred embodiment hence allows to provide a reliable estimation of the distribution of the permeability of the formation surrounding the borehole.

Preferably conventional well test measurements are also performed, so as to obtain measurements of a well test parameter as a function of time. In a buildup test, as illustrated in FIG. 10, a pressure sensor may regularly measure a pressure of the fluid within the borehole (box 1011). The measured values of the pressure may be used to test whether the well test is over or not (box 1007).

The measured values of the pressure as a function of time may be used to check the estimated value of the distribution of the permeability $(k)_i$. For example, a well test value of the permeability may be computed using the measured values of the pressure. The well test value of the permeability is an average value and may hence be compared to an average of the estimated values of the permeability $(k)_i$, so as to validate the estimation.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

**Claims**

1. A method for estimating a property of a formation surrounding a borehole, the method comprising:

    applying transient well-test conditions (31) to the borehole;
    exciting a portion of the formation with an acoustic signal (32);
    measuring an acoustic response (33) corresponding to the acoustic exciting with an acoustic receiver located within the borehole;
    estimating the property of the formation (36) using the acoustic response.

2. The method of claim 1, further comprising :

    assessing a formation pressure (35) using the acoustic response; and
    estimating the property of the formation using the assessed formation pressure.

3. The method of claim 1, further comprising :

    measuring a plurality of acoustic responses;
    evaluating at least one variation of an acoustic response feature using the plurality of measured acoustic responses; and
    assessing at least one formation pressure change using the evaluated variation of the acoustic response feature.

4. The method according to claim 3, further comprising :

    measuring at least three acoustic responses respectively with at least three acoustic receivers, each acoustic receiver having a determined location within the borehole;
    estimating a distribution of the property of the formation as a function of space using at least two assessed formation pressure changes.

5. The method of claim 3, further comprising:

    measuring the plurality of acoustic responses at distinct times during the well-test;
estimating the property of the formation using the plurality of acoustic responses.

6. The method of claim 3, further comprising measuring the acoustic responses at various times during a well test using a plurality of acoustic receivers;
assessing a plurality of formation pressure changes as a function of depth and as a function of time using the acoustic responses;
estimating a distribution of the property of the formation using the plurality of assessed formation pressure changes.

7. The method of claim 6, further comprising:

    initially exciting a portion of the formation with an initial acoustic signal;
    measuring at least one initial acoustic response corresponding to the initial exciting before a well test is performed; and
    using the initial acoustic response to estimate the property of the formation.

8. The method of any one of claims 1 to 7, further comprising :

    performing conventional well test measurements;
    using the conventional well test measurements to estimate the property of the formation.

9. The method of claim 8, wherein the applying of the transient well-test conditions comprises controlling a flow rate of a fluid within the borehole; and
the conventional well test measurements are well test pressure measurements.

10. The method of any one of claims 1 to 9, wherein the property of the formation to be estimated is a permeability of the formation.

11. A system for estimating a property of a formation (202) surrounding a borehole (201), the system comprising :

    controlling means (212, 208) to control a well test parameter;
    an acoustic emitter (211) to excite at least a portion of the formation with an acoustic signal;
    at least one acoustic receiver (210) located within the borehole, the at least one acoustic receiver allowing to measure at least one acoustic response corresponding to the acoustic exciting;
    processing means to estimate the property of the formation using the at least one acoustic response.

**12.** The system of claim 11, further comprising :

a plurality of acoustic receivers (610a, 610b, 610c, 610d), each acoustic receiver having a determined location within the borehole;

and wherein :

the acoustic emitter (611) is located at a surface.

**13.** The system of claim 11, further comprising :

a plurality of acoustic receivers, each acoustic receiver having a determined location within the borehole;

and wherein :

the acoustic emitter is located within the borehole.

**14.** The system according to any one of claims 12 or 13, further comprising :

at least one additional acoustic emitter.

**15.** The system of any one of claims 11 to 15, wherein :

the well test parameter is a flow rate of a fluid within the borehole; the system further comprising at least one pressure sensor to perform well test pressure measurements.

**16.** The system of any one of claims 11 to 15, wherein :

the well test parameter is a pressure of a fluid flowing through the borehole; the system further comprising at least one flowmeter to perform well test flow rate measurements.

**17.** The system of any one of claims 11 to 17, wherein :

the property of the formation to be estimated is a permeability of the formation.

**Amended claims in accordance with Rule 86(2) EPC.**

**1.** A method for estimating a permeability of a formation surrounding a borehole, the method comprising:

applying transient well-test conditions (31) to the borehole;

exciting a portion of the formation with an acoustic signal (32); measuring an acoustic response (33) corresponding to the acoustic exciting with an acoustic receiver located within the borehole; estimating the permeability of the formation (36) using the acoustic response.

**2.** The method of claim 1, further comprising :

performing conventional well test measurements; using the conventional well test measurements to estimate the permeability of the formation.

**3.** The method of claim 2, wherein

the applying of the transient well-test conditions comprises controlling a flow rate of a fluid within the borehole; and the conventional well test measurements are well test pressure measurements.

**4.** The method according to anyone of claims 1 to 3, further comprising :

assessing a formation pressure (35) using the acoustic response; and estimating the permeability of the formation using the assessed formation pressure.

**5.** The method according to anyone of claims 1 to 3, further comprising :

measuring a plurality of acoustic responses; evaluating at least one variation of an acoustic response feature using the plurality of measured acoustic responses; and assessing at least one formation pressure change using the evaluated variation of the acoustic response feature.

**6.** The method of claim 5, further comprising :

measuring at least three acoustic responses respectively with at least three acoustic receivers, each acoustic receiver having a determined location within the borehole; estimating a distribution of the permeability of the formation as a function of space using at least two assessed formation pressure changes.

**7.** The method of claim 5, further comprising:

measuring the plurality of acoustic responses at distinct times during the well-test; estimating the permeability of the formation using the plurality of acoustic responses.

8. The method of claim 5, further comprising

measuring the acoustic responses at various times during a well test using a plurality of acoustic receivers;
assessing a plurality of formation pressure changes as a function of depth and as a function of time using the acoustic responses;
estimating a distribution of the permeability of the formation using the plurality of assessed formation pressure changes.

9. The method of claim 8, further comprising:

initially exciting a portion of the formation with an initial acoustic signal;
measuring at least one initial acoustic response corresponding to the initial exciting before a well test is performed; and
using the initial acoustic response to estimate the permeability of the formation.

10. A system for estimating a permeability of a formation (202) surrounding a borehole (201), the system comprising :

controlling means (212, 208) to control a well test parameter;
an acoustic emitter (211) to excite at least a portion of the formation with an acoustic signal;
at least one acoustic receiver (210) located within the borehole, the at least one acoustic receiver allowing to measure at least one acoustic response corresponding to the acoustic exciting;
processing means to estimate the permeability of the formation using the at least one acoustic response.

11. The system of claim 10, wherein :

the well test parameter is a flow rate of a fluid within the borehole;
the system further comprising
at least one pressure sensor to perform well test pressure measurements.

12. The system of claim 10 or 11, wherein :

the well test parameter is a pressure of a fluid flowing through the borehole;
the system further comprising
at least one flowmeter to perform well test flow rate measurements.

13. The system according to anyone of claims 10 to 13, further comprising :

a plurality of acoustic receivers (610a, 610b, 610c, 610d), each acoustic receiver having a determined location within the borehole;
and wherein :
the acoustic emitter (611) is located at a surface.

14. The system according to anyone of claims 10 to 13, further comprising :

a plurality of acoustic receivers, each acoustic receiver having a determined location within the borehole;
and wherein :
the acoustic emitter is located within the borehole.

15. The system according to anyone of claims 11 to 13, further comprising :

at least one additional acoustic emitter.

FIG.1 PRIOR ART

FIG. 2

Apply transient well test conditions — 31

excite with an acoustic signal — 32

measure an acoustic response — 33

extract an acoustic response feature — 34

assess a formation pressure — 35

estimate a property of the formation — 36

FiG.3

set a pressure — 41

excite with a first acoustic wave — 42

measure a first acoustic response S1(t) — 43

excite with a second acoustic wave — 44

measure a second acoustic response S2(t) — 45

evaluate a variation of velocity ratios $\Delta\left(\frac{Vp}{Vs}\right)$ — 46

assess a formation pressure change $\Delta P$ — 47

estimate the permeability of the formation k — 48

FIG. 4

Set a flow rate of a fluid flowing though the borehole — S1

excite with an acoustic wave — S2

measure a first acoustic response S1(t) a second acoustic response S2(t) — S3

evaluate a variation of velocity ratios $\Delta \frac{V_p}{V_s}$ — S4

assess a formation pressure change $\Delta P$ — S5

estimate the permeability k — S6

FIG. 5

FIG. 6

711b

711a

711c

702

710

710

701

714

FiG.7

FiG. 8

FIG. 9

FIG. 10

**European Patent Office**

**EUROPEAN SEARCH REPORT**

Application Number

EP 04 29 1853

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 2 293 652 A (SCHLUMBERGER LTD) 3 April 1996 (1996-04-03) * page 6, line 16 - line 31; figure 6 * * page 1, line 5 - line 17 * | 1,11 | G01V1/40 E21B49/00 |
| X | US H1 156 H (SIEGFRIED ROBERT W.) 2 March 1993 (1993-03-02) * abstract; figure 1 * * column 1, line 48 - line 52 * | 1,11 | |
| X | US 2002/027004 A1 (JONES KEVIN R ET AL) 7 March 2002 (2002-03-07) | 11,17 | |
| A | * paragraph [0021]; figures 2,4 * * page 3, left-hand column, line 2 - line 6 * | 1,10 | |
| A | KUCHUK FIKRI J ET AL: "Estimating permeability distribution from 3D interval pressure transient tests" J. PET. SCI. ENG.; JOURNAL OF PETROLEUM SCIENCE AND ENGINEERING AUGUST 2003, vol. 39, no. 1-2, August 2003 (2003-08), pages 5-27, XP002311976 * the whole document * ** Introduction ** | 1,10,11, 17 | |
| A | EP 0 698 722 A (HALLIBURTON CO) 28 February 1996 (1996-02-28) * abstract * | 1,10,11, 17 | TECHNICAL FIELDS SEARCHED (Int.Cl.7) G01V E21B |
| A | US 2002/188407 A1 (KHAN TAWASSUL A) 12 December 2002 (2002-12-12) * abstract; figures 1,6,7 * * paragraph [0066] - paragraph [0071] * | 1,10,11, 17 | |

-/--

The present search report has been drawn up for all claims

| Place of search | Date of completion of the search | Examiner |
|---|---|---|
| The Hague | 23 December 2004 | De Bekker, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 04 29 1853

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | FR 1 573 830 A (LEBRETON F. ET AL) 11 July 1969 (1969-07-11) * page 1, left-hand column, line 12 - line 20 * * page 7, right-hand column, line 6 - line 28; figure 12 * * page 3, right-hand column, line 28 - page 4, left-hand column, line 60 * ----- | 1,10 | |
| A | US 2004/059512 A1 (PEPPER CHARLES FRED ET AL) 25 March 2004 (2004-03-25) * paragraph [0018]; figure 1 * * paragraph [0032] * ----- | 1,2, 10-12,17 | |
| A | US 4 964 101 A (LIU HSUI-LIN ET AL) 16 October 1990 (1990-10-16) * abstract; figures 4,5 * * column 1, line 50 - line 53 * * column 10, line 31 - line 35 * ----- | 1,10 | |
| Y | US 2003/026166 A1 (ARONSTAM PETER S) 6 February 2003 (2003-02-06) * paragraph [0010] * * paragraph [0013] * * paragraph [0032] * | 1,10-14, 17 | **TECHNICAL FIELDS SEARCHED (Int.Cl.7)** |
| Y | US 5 406 530 A (YAMAMOTO TOKUO) 11 April 1995 (1995-04-11) * abstract; figure 1 * * column 4, line 25 - line 35 * * column 8, line 57 - column 9, line 2 * ----- | 1,10-14, 17 | |
| D,A | US 5 247 829 A (EHLIG-ECONOMIDES CHRISTINE) 28 September 1993 (1993-09-28) * the whole document * ----- | 1-17 | |

The present search report has been drawn up for all claims

| Place of search | Date of completion of the search | Examiner |
|---|---|---|
| The Hague | 23 December 2004 | De Bekker, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 29 1853

This annex lists the patent family members relating to the patent documents cited in the above-mentioned European search report.
The members are as contained in the European Patent Office EDP file on
The European Patent Office is in no way liable for these particulars which are merely given for the purpose of information.

23-12-2004

| Patent document cited in search report | | Publication date | Patent family member(s) | | Publication date |
|---|---|---|---|---|---|
| GB 2293652 | A | 03-04-1996 | US | 5619475 A | 08-04-1997 |
| US H1156 | H | 02-03-1993 | NONE | | |
| US 2002027004 | A1 | 07-03-2002 | AU | 753252 B2 | 10-10-2002 |
| | | | AU | 7273798 A | 27-11-1998 |
| | | | AU | 7275398 A | 27-11-1998 |
| | | | AU | 749714 B2 | 04-07-2002 |
| | | | AU | 8479898 A | 08-02-1999 |
| | | | CA | 2264632 A1 | 12-11-1998 |
| | | | CA | 2288784 A1 | 12-11-1998 |
| | | | CA | 2296054 A1 | 21-01-1999 |
| | | | CA | 2409277 A1 | 12-11-1998 |
| | | | DE | 69816743 D1 | 04-09-2003 |
| | | | DE | 69816743 T2 | 03-06-2004 |
| | | | EP | 1357401 A2 | 29-10-2003 |
| | | | EP | 1357403 A2 | 29-10-2003 |
| | | | EP | 1357402 A2 | 29-10-2003 |
| | | | EP | 1355170 A2 | 22-10-2003 |
| | | | EP | 1355166 A2 | 22-10-2003 |
| | | | EP | 1355167 A2 | 22-10-2003 |
| | | | EP | 1355168 A2 | 22-10-2003 |
| | | | EP | 1355169 A2 | 22-10-2003 |
| | | | EP | 0910725 A1 | 28-04-1999 |
| | | | GB | 2343695 A ,B | 17-05-2000 |
| | | | GB | 2362462 A ,B | 21-11-2001 |
| | | | GB | 2362463 A ,B | 21-11-2001 |
| | | | GB | 2364380 A ,B | 23-01-2002 |
| | | | GB | 2364381 A ,B | 23-01-2002 |
| | | | GB | 2364382 A | 23-01-2002 |
| | | | GB | 2364383 A | 23-01-2002 |
| | | | GB | 2364384 A | 23-01-2002 |
| | | | GB | 2339902 A ,B | 09-02-2000 |
| | | | NO | 991350 A | 19-03-1999 |
| | | | NO | 995319 A | 20-12-1999 |
| | | | NO | 20000113 A | 08-03-2000 |
| | | | NO | 20023857 A | 19-03-1999 |
| | | | NO | 20032268 A | 19-03-1999 |
| | | | US | 6268911 B1 | 31-07-2001 |
| | | | WO | 9850681 A1 | 12-11-1998 |
| | | | WO | 9850680 A2 | 12-11-1998 |
| | | | WO | 9902819 A1 | 21-01-1999 |
| | | | US | 2003205083 A1 | 06-11-2003 |
| | | | US | 2004043501 A1 | 04-03-2004 |
| | | | US | 2004065439 A1 | 08-04-2004 |
| | | | US | 2001023614 A1 | 27-09-2001 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 04 29 1853

This annex lists the patent family members relating to the patent documents cited in  the above-mentioned European search report.
The members are as contained in the European Patent Office EDP file on
The European Patent Office is in no way liable for these particulars which are merely given for the purpose of information.

23-12-2004

| Patent document cited in search report | | Publication date | Patent family member(s) | | Publication date |
|---|---|---|---|---|---|
| US 2002027004 | A1 | | US | 2002066309 A1 | 06-06-2002 |
| EP 0698722 | A | 28-02-1996 | US | 5602334 A | 11-02-1997 |
| | | | DE | 69529126 D1 | 23-01-2003 |
| | | | DE | 69529126 T2 | 24-04-2003 |
| | | | EP | 0698722 A2 | 28-02-1996 |
| US 2002188407 | A1 | 12-12-2002 | NONE | | |
| FR 1573830 | A | 11-07-1969 | NL | 6809586 A | 09-01-1969 |
| | | | OA | 2852 A | 15-12-1968 |
| US 2004059512 | A1 | 25-03-2004 | US | 2002159332 A1 | 31-10-2002 |
| | | | AU | 9677601 A | 22-04-2002 |
| | | | EP | 1410072 A1 | 21-04-2004 |
| | | | WO | 0231538 A1 | 18-04-2002 |
| | | | US | 2003151975 A1 | 14-08-2003 |
| | | | US | 2004059511 A1 | 25-03-2004 |
| | | | US | 2004162676 A1 | 19-08-2004 |
| US 4964101 | A | 16-10-1990 | NONE | | |
| US 2003026166 | A1 | 06-02-2003 | US | 6456566 B1 | 24-09-2002 |
| | | | AU | 8065801 A | 05-02-2002 |
| | | | BR | 0112709 A | 27-07-2004 |
| | | | CA | 2416669 A1 | 31-01-2002 |
| | | | GB | 2383844 A ,B | 09-07-2003 |
| | | | NO | 20030321 A | 25-02-2003 |
| | | | WO | 0208791 A1 | 31-01-2002 |
| | | | US | 2002092701 A1 | 18-07-2002 |
| US 5406530 | A | 11-04-1995 | NONE | | |
| US 5247829 | A | 28-09-1993 | DE | 69113739 D1 | 16-11-1995 |
| | | | EP | 0481866 A2 | 22-04-1992 |

EPO FORM P0459

For more details about this annex : see Official Journal of the European Patent Office, No. 12/82